# EUROPEAN PATENT SPECIFICATION

(11) **EP 4 680 075 B1**
(45) Date of publication and mention of the grant of the patent: **25.11.2026**
(21) Application number: 24829011.6
(22) Date of filing: 27.05.2024
(51) Int. Cl.: A47C 27/15, B29D 99/00, B68G 7/00

(54) **HOMOGENEOUS MOLDED VISCO MATTRESS MANUFACTURING**
HOMOGENE GEFORMTE HERSTELLUNG VON VISCO-MATRATZEN
FABRICATION DE MATELAS VISCO MOULÉ HOMOGÈNE

(43) Date of publication of application: 21.01.2026
(73) Proprietor: Ural Medikal Ticaret ve Pazarlama Anonim Sirketi, Beykoz 34830 Istanbul (TR)
(72) Inventor: YETERLER, Emirhan, 34830 Beykoz/Istanbul (TR)
(74) Representative: Kaya, Erdem
(86) International application number: PCT/TR2024/050545
(87) International publication number: WO 2025/250088

(56) References cited:
- KR-B1- 101 328 755
- KR-B1- 101 328 755
- US-A- 3 393 258
- US-A1- 2005 017 396
- US-B1- 7 334 280
- US-B2- 6 745 420

## Description

### Technical Field

The invention relates to homogeneous molded visco mattress.

The invention particularly relates to the manufacturing of mattresses with a foam base and a molding visco upper surface. Within the scope of the invention, the foam base and the visco polyurethane liquid are combined homogeneously at the desired comfort height in a closed mold system, without any spring or adhering process, and an ergonomic and medical visco mattress is produced.

### State of the Art

Visco mattress is made of polyurethane-based elastic foam, also called memory foam. Visco elastic foam adapts to body contours in the best way by compressing due to pressure and body temperature. For this reason, hybrid mattresses stand out in the production of ergonomic mattresses. In these hybrid models, the bottom base of which comprises ergonomic foam of a selected hardness, and the upper surface of visco layers at a selected height, are produced by joining methods such as adhering the two surfaces together.

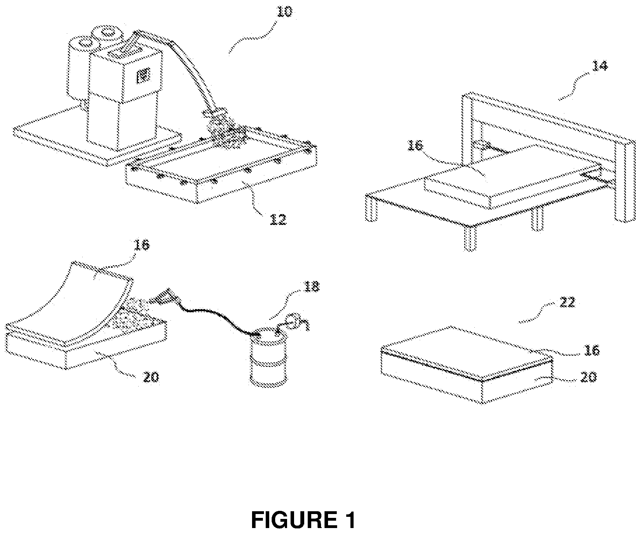

A manufacturing equipment as seen in the diagram for the manufacturing equipment in the state of the art in Figure 1, a visco molding machine and molding for the production of visco material in block form with the desired properties, a cutting machine where the produced block visco is cut to the desired fineness and a spray adhering machine used to combine the visco layer cut from the block with a selected foam base. For the production of hybrid adhered mattresses, the polyurethane liquid material mixture prepared according to the recipe determined in the visco casting machine (10) is poured into block visco molds (12). These molds are used separately in different sizes according to the desired mattress size molds. Again, shrinkage differences in these molds cause wastage. The pads are prepared by taking the molding visco block into the cutting machine (14) and cutting it into visco layers (16) in the desired thickness. The cut visco layers (16) are assembled on the selected carrier foam base (20) by means of a spray adhering machine (18) that sprays adhesive in between. Since solvent-based adhesive is used in the adhering process during this assembly, solvent and similar odor dissatisfaction in the adhesive mattress (22), sizing problems, lifting and openings on the adhering surface resulting from spraying unevenness, the need for block visco stock in different densities according to demands, and also the length of the process have led to the need to develop a new production technique.

In the national application with publication number TR2021/019008, which was encountered in the literature research, the method of manufacturing a mattress made of polyurethane material, which includes the process steps of placing springs into the molded mattress and pouring the polyurethane material into the mold, is described. The application with publication number TR2021/004472 relates to the production of polyurethane molding mattress in the furniture industry, which are produced based on the production of a more flexible, useful and easy-to-produce, healthier mattress. The patent, publication numbered EP3205680B1 describes mattresses and/or pillows comprising at least one section consisting of soft polyurethane foam, which is resistant to abrasion and has low emissions. The relevant applications are for standard visco mattresses, and no application has been found for the production of foam-based hybrid mattresses other than adhering.

The document US 2005/017396 A1 discloses a molded visco mattress according to the state of the art**.**

As a result, it has become necessary to make a development in the relevant technical field due to the negativities described above and the inadequacy of existing solutions on the subject.

### Object of the Invention

The invention is inspired by present situations and aims to solve the above-mentioned deficiencies.

The main object of the invention is to combine the foam base and the visco polyurethane liquid homogeneously at the desired comfort height in a closed mold system, without spring or adhering process, and to produce an ergonomic and medical visco mattress.

An object of the invention is to produce a mattress that does not harm human and environmental health since the solvent-based adhesives are not used.

An object of the invention is to produce a mattress without solvent and similar odor dissatisfaction.

An object of the invention is to produce a mattress without sizing problems by means of the closed mold system.

An object of the invention is to produce a homogeneous mattress without lifting or opening due to spraying unevenness on the adhering surface by means of the closed mold system.

An object of the invention is to provide an economical production method that eliminates the need for visco block stocks with different densities and shortens the process time by molding visco upper surface at the desired density by means of the closed mold system.

In order to achieve the objects described above, the invention includes homogeneous visco molded mattresses, the installation for the manufacturing of these mattresses and the production method with this installation.

In accordance with the present invention defined in claim 1, production begins by placing the foam on the upper cover of the molds with a locking mechanism, comprising a lower and upper cover produced according to customer demands, to produce a foam carrier base, visco molded mattress, with a needle holder and the foam on the holders where the foam will be fixed. Again, an elevator unit that will close this upper cover to the lower cover, the lower cover has a structure with a gap equal to the desired visco foam height. After the time required for the visco foam chemical is calculated and applied with the help of a molding machine, which allows it to be poured by scanning it with the help of a transverse molding head, the upper cover is closed and locked with the help of the elevator unit. The visco foam applied to the lower mattress mold rises to the level of the carrier foam and joins. Since this joint swells by adapting to the carrier foam with the reaction that occurs after it is laid on the lower mold cover, it does not open, does not cause odor, and adapts to the carrier foam ergonomically and homogeneously. The joined visco mattress textile, which is compatible with the visco-surfaced foam carrier base in terms of its form and shape, is ready to be dressed. It enables rapid and sustainable production without wastage.

The structural and characteristic features and all the advantages of the invention will be more clearly understood by means of the drawings given below and the detailed description written with references to these drawings, and therefore the evaluation needs to be made by taking these drawings and the detailed description into consideration.

### Figures to Help Understand the Invention

**Figure 1** is a schematic view of the installation for adhered mattress manufacturing in the present art.
**Figure 2** is a schematic view of the installation for the manufacturing of homogeneous visco molded mattress, which is subject of the invention.

### Description of Part References

10 casting machine
12 block visco mold
14 cutting machine
16 visco layer
18 adhering machine
20 carrier support foam
22 adhesive mattress
24 elevator unit
26 upper mold
28 visco molding machine
30 liquid visco material
32 lower mold
34 visco molded upper layer
36 homogeneous molded visco mattress

### Detailed Description of the Invention

In this detailed description, the preferred embodiments of the mattress, which is the subject of the invention, are described only for a better understanding of the subject.

The invention is based on the principle of combining the foam base and the molding liquid visco material homogeneously at the desired comfort height in a closed mold system, without any spring or adhering process.

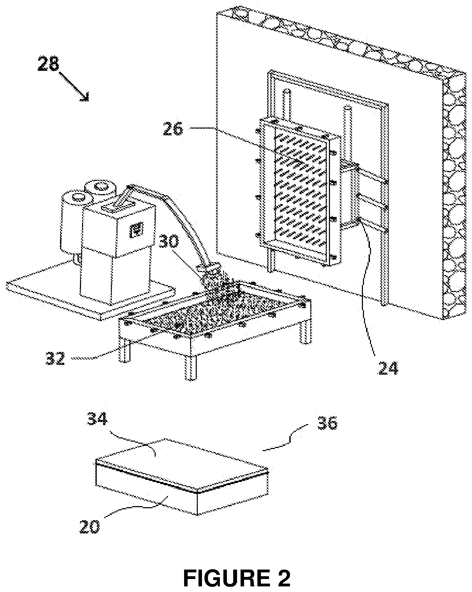

The installation, which is subject of the invention, for the manufacture of a homogeneous molded visco mattress (36) containing a visco molding machine (28) that sprays liquid visco material (30) with a predetermined recipe, the schematic view of which is given in Figure 2, is different from the present art, comprising a molded mattress upper mold (26), preferably with needle-shaped metal handles on its surface, in which a carrier support foam (20) forming the lower layer of said mattress is placed, a molded mattress lower mold (32) in which the upper layer of the visco molded upper layer (34) of said mattress is molded, preferably with wheels to ensure its connection with the carrier support foam (20) and containing at least one locking mechanism that allows locking said molded mattress upper mold (26), a closed mold system comprising an elevator unit (24) that enables quick and ergonomic closing of said molded mattress upper mold (26) to said molded mattress lower mold (32).

The invention also comprises a method for manufacturing a homogeneous visco molded mattress (36) with the installation containing said closed mold system, and it comprises the following process steps: loading the liquid visco material (30) prepared in accordance with a predetermined recipe into the visco molding machine (28) and entering the predetermined parameters, lifting the molded mattress upper mold (26) with the elevator unit (24) and placing the carrier support foam (20) inside and fixing it with needle holders, starting the visco molding machine (28) and spraying liquid visco material into the molded mattress lower mold (32), performing the molding process and closing it on the molded mattress upper mold (26) and leaving it to cure, at the end of curing, opening the molded mattress upper mold (26) and removing the homogeneous molded visco mattress (36).

The invention also comprises a homogeneous molded visco mattress (36) comprising a visco molded upper layer (34) and a carrier support foam (20) lower layer combined with the mentioned method.

According to an embodiment of the invention, the carrier support foam (20) has a density of 28-30 and a height of 13 cm.

According to an embodiment of the invention, the visco molding machine (28) operates with a capacity of 500-1000 gr / sec.

According to an embodiment of the invention, the liquid visco material (30) recipe is formed in different densities so that it rises 7 cm and can provide the necessary time to close the upper cover before the reaction time after screening (laying) is completed.

According to an embodiment of the invention, the molds (26,32) mentioned may be 90*200 cm, 160*200 cm or different sizes.

According to an embodiment of the invention, the homogeneous molded visco mattress (36) comprises a 7 cm visco molded upper layer (34) and a 13 cm carrier support foam (20) lower layer.

In an embodiment of the invention, molds (26,32) of sizes determined according to customer demand are taken into the visco molded mattress (36) area with the upper mold (26) cover and the lower mold (32) cover locked. Visco molding machine (28) is made ready. Liquid visco material (30) containing chemicals suitable for the recipe is loaded into the machine and the relevant parameters are entered. These parameters vary depending on sizes. Again, carrier foams (20) for the visco molded mattress are taken to the molding area. The locked lower (32) and upper mold (26) are approached to the elevator/lift (24) unit. The upper mold (26) cover is attached to the elevator/lift (24) system. The locks are opened and the upper mold (26) cover is removed. A carrier foam (20) is attached to the upper mold (26) cover. This carrier foam (20) is fixed with the needle holders inside the upper mold (26) cover. Recipe chemicals and application times are controlled on the molding machine (28) screen. The molding machine (28) is operated and the PU visco layer (34) is scanned transversely onto the lower mold (32) cover and the molding process is performed. The lower and upper mold covers are closed by closing the upper mold (26) cover. Herein, chemical molding time and upper cover mold closing time are very important. For the success of this application, the elevator unit (24) plays a critical role as much as the chemical recipe. Since the reaction starts, it is a very important function that ensures efficiency and quality in application. After an average of 30 minutes of curing time, the upper and lower molds are approached to the elevator unit (24). The cover locks are opened and the upper mold (26) cover is removed. The carrier support foam (20) and the visco molded upper layer (34) are perfectly homogeneous and their dimensions are clearly combined. The homogeneous molded visco mattress (36), which forms the output of this invention, is separated from the lower mold (32) cover and moved to the mattress packaging area. The process is continued efficiently and sustainably by serially molding and changing molds of different sizes.

Unlike many other visco elastic mattresses, which are cut from blocks in the present art and lose many features of the visco product, the visco molded upper layer (memory foam mattresses) produced in molds preferably comprise 7 cm Visco material. This upper layer is molded directly onto a preferred polyurethane foam base. Among the examples of the invention, mattresses with heights of 15-17-20-22 cm can be produced. Mattresses produced in this way can have densities from 50 kg/m³ to 130 kg/m³. Decoratively, its surfaces can be covered with needle core and many different types of fabric.

The polyurethane foam base and/or visco material (memory foam) mentioned here is obtained by reacting at least one polyol component and at least one isocyanate component in the presence of at least one blowing agent.

In preferred examples of the invention, the visco material mentioned comprises water-based MDI (methylene diphenyl diisocyanate), which has been tested and approved by Okotex and does not contain harmful gases and substances.

## Claims

1. An installation having visco molding machine (28) for production of homogeneous molded visco mattress (36), **characterized by** comprising:
- a cast mattress upper mold (26), with needle-shaped metal handles on surface, in which a carrier support foam (20) forming the lower layer of said mattress is configured to be placed,
- a cast mattress lower mold (32), in which the visco cast upper layer (34) of said mattress is configured to be molded, preferably with wheels to ensure connection with the carrier support foam (20) and comprising at least one locking mechanism that allows locking to said molded mattress upper mold (26),
- an elevator unit (24) that enables quick and ergonomic closing of said molded mattress upper mold (26) to said molded mattress lower mold (32).

2. A method for manufacturing homogeneous molded visco mattress (36) with the installation having closed mold system according to claim 1, **characterized by** comprising following process steps:
- loading liquid visco material (30) prepared in accordance with a predetermined recipe into the visco molding machine (28) and entering the predetermined parameters,
- lifting the molded mattress upper mold (26) with the elevator unit (24) and placing the carrier support foam (20) inside and fixing with needle holders,
- starting the visco molding machine (28) and spraying liquid visco material into the molded mattress lower mold (32), performing the molding process and closing on the molded mattress upper mold (26) and leaving to cure,
- at the end of curing, opening the molded mattress upper mold (26) and removing the homogeneous molded visco mattress (36).

## Patentansprüche

1. Anlage mit einer Visco-Formmaschine (28) zur Herstellung einer homogenen, formgegossenen Visco-Matratze (36), **dadurch gekennzeichnet, dass** sie Folgendes umfasst:
- eine obere Gießform (26) für die gegossene Matratze, die an ihrer Oberfläche nadelförmige Metallgriffe aufweist und in der ein die untere Schicht der Matratze bildender Träger-Stützschaum (20) angeordnet werden soll,
- eine untere Gießform (32) für die gegossene Matratze, in der die obere, aus Visco-Material gegossene Schicht (34) der Matratze geformt werden soll, vorzugsweise mit Rädern zur Sicherstellung der Verbindung mit dem Träger-Stützschaum (20), und die mindestens einen Verriegelungsmechanismus umfasst, der eine Verriegelung mit der oberen Gießform (26) für die formgegossene Matratze ermöglicht,
- eine Hubeinheit (24), die ein schnelles und ergonomisches Schließen der oberen Gießform (26) für die formgegossene Matratze mit der unteren Gießform (32) für die formgegossene Matratze ermöglicht.

2. Verfahren zur Herstellung einer homogenen, formgegossenen Visco-Matratze (36) unter Verwendung der Anlage mit geschlossenem Formsystem nach Anspruch 1, **dadurch gekennzeichnet, dass** es die folgenden Verfahrensschritte umfasst:
- Einfüllen eines gemäß einer vorgegebenen Rezeptur vorbereiteten flüssigen Visco-Materials (30) in die Visco-Formmaschine (28) und Eingeben der vorgegebenen Parameter,
- Anheben der oberen Gießform (26) für die formgegossene Matratze mittels der Hubeinheit (24), und Einlegen des Träger-Stützschaums (20) und Fixieren desselben mittels Nadelhaltern,
- Starten der Visco-Formmaschine (28) und Sprühen des flüssigen Visco-Materials in die untere Gießform (32) für die formgegossene Matratze, Durchführen des Formgebungsprozesses, Schließen auf die obere Gießform (26) für die formgegossene Matratze und Aushärtenlassen,
- Öffnen der oberen Gießform (26) für die formgegossene Matratze nach Abschluss des Aushärtens und Entnehmen der homogenen, formgegossenen Visco-Matratze (36).

## Revendications

1. Une installation comportant une machine de moulage de visco (28) pour la production d'un matelas visco moulé homogène (36), **caractérisée en ce qu'**elle comprend :
- un moule supérieur de matelas coulé (26), avec des poignées métalliques en forme d'aiguille sur la surface, dans lequel une mousse de support porteuse (20) formant la couche inférieure dudit matelas est configurée pour être placée,
- un moule inférieur de matelas coulé (32), dans lequel la couche supérieure visco coulée (34) dudit matelas est configurée pour être moulée, de préférence avec des roues pour assurer la connexion avec la mousse de support porteuse (20) et comprenant au moins un mécanisme de verrouillage qui permet le verrouillage audit moule supérieur de matelas moulé (26),
- une unité d'élévation (24) qui permet une fermeture rapide et ergonomique dudit moule supérieur de matelas moulé (26) sur ledit moule inférieur de matelas moulé (32).

2. Une méthode de fabrication d'un matelas visco moulé homogène (36) avec l'installation ayant un système de moule fermé selon la revendication 1, **caractérisée en ce qu'**elle comprend les étapes de processus suivantes :
- le chargement du matériau visco liquide (30) préparé conformément à une recette prédéterminée dans la machine de moulage de visco (28) et la saisie des paramètres prédéterminés,
- le levage du moule supérieur de matelas moulé (26) avec l'unité d'élévation (24) et le placement de la mousse de support porteuse (20) à l'intérieur et sa fixation avec des supports à aiguilles,
- le démarrage de la machine de moulage de visco (28) et la pulvérisation du matériau visco liquide dans le moule inférieur de matelas moulé (32), la réalisation du processus de moulage et la fermeture sur le moule supérieur de matelas moulé (26) et le fait de laisser durcir,
- à la fin du durcissement, l'ouverture du moule supérieur de matelas moulé (26) et le retrait du matelas visco moulé homogène (36).
